# EUROPÄISCHE PATENTSCHRIFT

(11) **EP 3 938 670 B1**
(45) Veröffentlichungstag und Bekanntmachung des Hinweises auf die Patenterteilung: **28.06.2023**
(21) Anmeldenummer: 20711495.0
(22) Anmeldetag: 03.03.2020
(51) Int. Cl.: F16C 23/08, F16C 33/58, F16C 33/60, F03D 80/70, F16C 35/063

(54) **ROTORLAGERUNG EINER WINDKRAFTANLAGE**
ROTOR BEARING OF A WIND TURBINE
PALIER DE ROTOR D'UNE ÉOLIENNE

(30) Priorität: 12.03.2019 DE 102019106276
(43) Veröffentlichungstag der Anmeldung: 19.01.2022
(73) Patentinhaber: Schaeffler Technologies AG & Co. KG, 91074 Herzogenaurach (DE)
(72) Erfinder: BIERLEIN, Andreas, 97437 Haßfurt (DE); SCHRÖDER, Rainer, 97440 Egenhausen (DE)
(86) Internationale Anmeldenummer: PCT/DE2020/100143
(87) Internationale Veröffentlichungsnummer: WO 2020/182251

(56) Entgegenhaltungen:
- EP-A1- 1 457 673
- WO-A1-2009/018976
- CN-A- 102 207 129
- CN-Y- 2 580 190
- DE-A1-102016 223 543
- DE-U- 1 958 363
- JP-A- 2007 218 394

## Beschreibung

Die Erfindung bezieht sich auf eine Rotorlagerung einer Windkraftanlage, insbesondere auf eine Rotorlagerung mit verbesserter axialer Krafteinleitung in den Innenring.

Eine übliche Rotorlagerung für eine Windkraftanlage ist aus DE 10 2009 041 7474 A1 bekannt. Dort wird als Wälzlager ein zweireihiges Pendelrollenlager verwendet, welches einen Innenring, einen Außenring und zwischen den beiden Laufringen abrollende Wälzkörper aufweist. Die axiale Länge des Innenrings entspricht dabei der axialen Länge des Außenrings. Um eine Rotorwelle einer Windkraftanlage abzustützen, durchdringt diese die Bohrung des Innenrings, während der Außenring des Wälzlagers von einem Gehäuse aufgenommen ist. Letztes ist der DE 103 10 639 A1 entnehmbar. Dieser Schrift ist auch entnehmbar, dass zur axialen Festlegung des Innenrings an einem Umfangsabschnitt der Rotorwelle zwei Schultern vorgesehen sind, die den Umfangsabschnitt axial begrenzen. Diese axiale Begrenzung des Umfangsabschnitts wird an der rotornahen Seite von einer Wellenschulter realisiert, wobei zwischen Wellenschulter und Innenring noch ein separater Distanzring vorgesehen ist, um axiale Kräfte von der Rotorwelle unter einem möglichst kleinen Winkel in den Innenring einzuleiten. Die axiale Begrenzung des Umfangsabschnitts an der rotorfernen Seite kann von einer Wellenmutter realisiert sein, wie der DE 102009 059 655 A1 entnehmbar ist. Die EP1 457 673 A1 zeigt zudem eine Rotorlagerung, bei welcher das Festlager einen Sicherungsring aufweist, der als Schrumpfscheibe ausgebildet ist und der Abstützung der in Richtung der Nabe gerichteten Axialkräfte vorgesehen ist. Die EP 1 457 673 A1 offenbart die Merkmale des Oberbegriffs von Anspruch 1.

Auch wenn in DE 10 2009 041 7474 A1 die Wälzkörper der beiden Rollenreihen einen symmetrischen Druckwinkel haben, kann -wie in DE 10 2015 204 970 A1 gezeigt- die rotorferne Rollenreihe zur besseren Aufnahme von Axialkräften gegenüber der rotornahen Rollenreihe einen größeren Druckwinkel haben.

Auch müssen die Lagerringe nicht notwendig als geschlossene Ringe ausgebildet sein, sondern können -wie DE 10 2017 110 742 A1 zeigt- zu einer besseren Austauschbarkeit des Wälzlagers von jeweils zwei Ringhälften gebildet sein, die nach der Vervollständigung zu beispielsweise einem Innenring mittels Spannringe zusammengehalten werden, indem den Spannring bildende Spannringsegmente um den gebildeten Innenring gelegt und mittels von durch die Spannringsegmente geschraubte Schrauben verbunden werden.

Sind Lagerringe allerdings radial geteilt, tritt bei hohen Lasten das Problem auf, dass die geteilten und mittels von Spannringen befestigen Lagerringe eine etwas geringere axiale Stabilität haben, was sich nachteilig auf die Lebensdauer solcher Wälzlager auswirkt.

Daher liegt der Erfindung die Aufgabe zugrunde, ein Rotorlager anzugeben, welches vereinfacht ausgebildet ist und sich durch eine verbesserte Stabilität auszeichnet.

### Darstellung der Erfindung

Diese Aufgabe wird mit den Merkmalen gemäß Anspruch 1 gelöst. Vorteilhafte Aus- und Weiterbildungen der Erfindung sind den Ansprüchen 2 bis 10 entnehmbar.

Weist der Innenring einen ersten axialen Abschnitt der Länge L2 auf, der der axialen Länge L3 des Außenrings entspricht, und zwei zweite, an den ersten Abschnitt axial anschließende Abschnitte unterschiedlich großer axialer Längen L4; L4.1, L4.2 auf, erfolgt, weil der Innenring den Umfangsabschnitt zwischen den beiden Schultern der Rotorwelle vollständig ausfüllt, die axiale Krafteinleitung von der Rotorwelle direkt in den Innenring unter einem flacheren und daher vorteilhaften Winkel, ohne dass zusätzliche, den Aufwand erhöhende Distanzringe erforderlich werden. Dadurch, dass der Innenring bezogen auf den Außenring eine größere axiale Länge hat und sich als zumindest axial einstückiges Bauteil zwischen den beiden Schultern des Umfangsabschnitts erstreckt, wird durch diese Einstückigkeit der Sitz des Innenrings an der Rotorwelle insgesamt verbessert. Dies insbesondere dann, wenn der Abschnitt größerer axialer Länge an der Seite des Innenrings anschließt, der dem Rotor zugewandt ist.

Die axiale Kraftübertragung ist weiter verbessert, wenn ein Wälzlager ein zweireihiges Pendelrollenlager ist, wobei die Wälzkörper der dem Rotor näheren Rollenreihe im Vergleich zu den Wälzkörpern der anderen Rollenreihe einen geringeren Druckwinkel aufweisen.

Ist das Wälzlager als radial geteiltes Wälzlager ausgebildet, ist ein Austausch des Wälzlagers vereinfacht.

Eine gute Verbindung zwischen Innenring und Rotorwelle ist dann gegeben, wenn mindestens zwei Spannringsegmente vorgesehen sind, die in verbundenen Zustand einen Spannring ergeben, und der Innenring auf der Rotorwelle von Spannringen zusammengehalten wird, die zu diesem Zweck die zweiten Abschnitte des Innenrings umgeben.

Die Abdichtung ist vereinfacht, wenn die Spannringe zumindest radial äußere Umfangsflächen bereitstellen, die zumindest eine mit einem Dichtpartner zusammenwirkende Dichtfläche bilden. Dabei können die Dichtflächen sowohl mit einer berührenden Dichtung als auch mit einer nicht berührenden, durch einen geringen Abstand getrennten Gegenfläche in Wirkverbindung stehen.

Eine unterbrechungsfreie Dichtfläche ist dann geschaffen, wenn ein zwischen den Endflächen von zwei montierten Spannringsegmenten verbleibende gegenseitige Abstand A mit einem Kunststoff oder Metall so ausgefüllt ist, dass die Umfangsfläche des einen Spannringsegments naht- bzw. übergangslos in die Umfangsfläche des anderen Spannringsegments übergeht. Bauraum- und materialsparende Spannringe sind gegeben, wenn die axiale Ausdehnung der Spannringe entlang der Drehachse der Rotorwelle ausgehend vom Mittelpunkt der Bohrung unterschiedlich groß ist, also Dichtflächen bezogen auf die Bohrungen nur an der Seite der Spannringe vorgesehen werden, an denen sie erforderlich sind.

Die Dichtwirkung ist weiter verbessert, wenn zwischen den Spannringen und den zweiten Abschnitten der Innenringe Dichtungen vorgesehen sind.

### Kurze Beschreibung der Figuren

### Es zeigen:

- Fig. 1: Rotorwelle gelagert von einem radial geteilten, asym. Pendelrollenlager,
- Fig. 2a, b: Übergang zwischen zwei, einen Spannring bildenden Spannringsegmenten,
- Fig. 3: eine Variante einer Ausführung gemäß Fig. 1,
- Fig. 4: eine weitere Variante einer Ausführung gemäß Fig. 1,
- Fig. 5: eine weitere Variante einer Ausführung gemäß Fig. 1, und
- Fig 6: einem Übergang zwischen zwei radial geteilten Außenringen.

### Wege zum Ausführen der Erfindung

Die Erfindung soll nun anhand der Figuren näher erläutert werden.

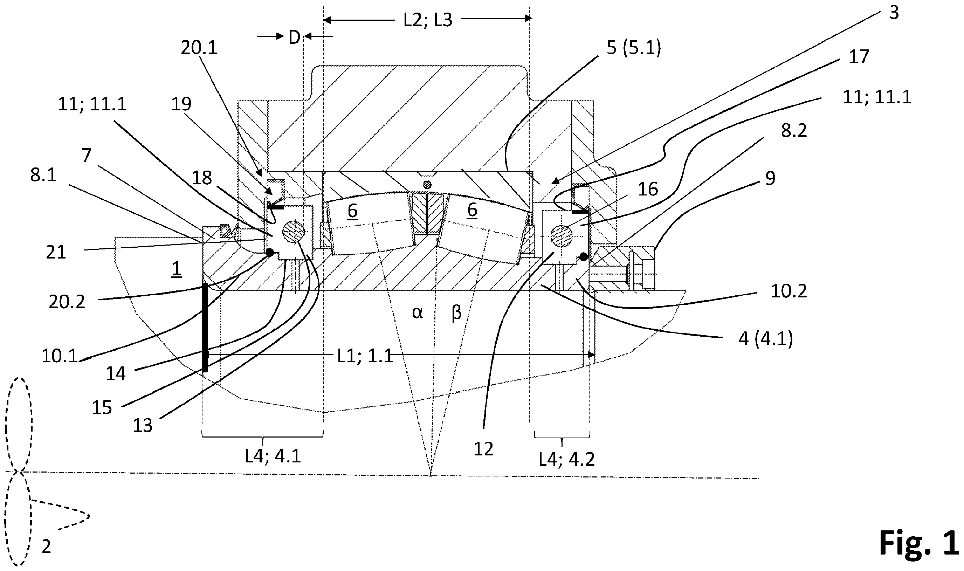

In Fig. 1 ist eine Rotorwelle 1 einer Windkraftanlage gezeigt. Mit dem einen Ende dieser Rotorwelle 1 ist ein in Fig. 1 angedeuteter Rotor 2 verbunden, der die Rotorwelle 1 antreibt. Diese Rotorwelle 1 wird in diesem Ausführungsbeispiel von einem Wälzlager 3 in der Form eines zweireihigen Pendelrollenlagers gelagert, welches einen Innenring 4, einen Außenring 5, Wälzkörper 6, die in zwei Reihen zwischen den Lagerringen 4, 5 angeordnet sind, und nicht näher bezeichnete Käfigelemente,12 welche die Wälzkörper 6 in Umfangsrichtung beabstanden. Die Wälzkörper 6 der unterschiedlichen Rollenreihen rollen unter unterschiedlich großen Druckwinkeln α, β zwischen den beiden Lagerringen 4, 5 ab, wobei die Wälzkörper 6 der dem Rotor 2 abgewandten Rollenreihe im Vergleich zu den Wälzkörpern 6 der anderen Rollenreihe unter dem größeren Druckwinkel β stehen.

Um den Austausch des Wälzlagers 3 zu erleichtern, sind sowohl der Innenring 4 als auch der Außenring 5 radial geteilt, wobei jeder der beiden Lagerringe 4, 5 von zwei, sich zu einem Lagerring 4,5 ergänzenden Halbschalen 4.1, 4.2; 5.1, 5.2 (in Fig. 1 nur teilweise sichtbar) gebildet ist. Der gezeigten Schraffierung ist entnehmbar, dass die beiden Halbschalen 4.1., 4.2 des Innenrings 4 und die beiden Halbschalen 5.1, 5.2 des Außenrings 5 im montierten Zustand bei 9 und 3 Uhr aneinanderliegen.

Das Wälzlager 3 ist mit seinem Innenring 4 mit der Rotorwelle 1 verbunden. Dies ist vorliegend so realisiert, dass der Innenring 4 bzw. die den Innenring 4 bildenden Halbschalen 4.1, 4.2 um die Rotorwelle 1 gelegt sind. Um eine axiale Verschiebung des gebildeten Innenrings 4 entlang der Rotorwelle 1 auszuschließen, ist rotorseitig eine Wellenschulter 7 an der die ersten Stirnflächen 8.1 des gebildeten Innenrings 4 anliegend. An dem dem Rotor 2 abgewandten, zur Aufnahme des Innenrings 4 vorgesehenen Umfangsabschnitt 9 der Rotorwelle 1 wird die zur axialen Festlegung des Innenrings 4 erforderliche Schulter von einer Wellenmutter 9 gebildet, die nach der Montage des Wälzlagers 3 angezogen wird und daher an der zweiten Stirnfläche 8.2 des gebildeten Innenrings 4 anliegt.

Um diese axiale Steifigkeit des Wälzlagers 3 auf der Rotorwelle 1 zu erhöhen und gleichzeitig axiale Kräfte unter einem flachen Winkel von der Wellenschulter 7 in den Innenring 4 einzuleiten, weist der gebildete Innenring 4 nicht nur eine axiale Länge L3 auf, die der axialen Länge L2 des gebildeten Außenrings 5 entspricht, sondern ist bezogen auf den zum angeordneten Außenring 5 in beide axial Richtungen um Abschnitte 10.1, 10.2 der Länge L4: 4.1, 4.2 verlängert ausgebildet, wobei der Abschnitt 10.1 mit der der größeren axialen Längen L4.1 sich in Richtung des Rotors 2 erstreckt. Folglich hat der Umfangsabschnitt 1.1 der Rotorwelle 1, welcher den Innenring 4 zwischen der Wellenschulter 7 und der Wellenmutter 8 aufnimmt, eine Länge L1, also L3 plus L4.1 plus L4.2 und wird vom Innenring 4 daher auch vollständig ausgefüllt.

Um den aus den beiden Halbschalen 4.1, 4.2 gebildeten Innenring 4 auch radial an der Rotorwelle 1 festzulegen, sind Spannringe 11 vorgesehen. Jeder dieser Spannringe 11 wird von zwei, sich zu einem Ring ergänzenden halbschalenförmigen Spannringsegmenten 11.1, 11.2 gebildet, wovon in Fig. 1 in der gewählten Darstellung jeweils nur eine Spannringsegment 11.1 sichtbar ist. Da die jeweiligen Spannringsegmente 11.1 (11.2) die einen Spannring 11 bilden, bei 6 und 12 Uhr aneinanderstoßen, sind die umfangsseitigen Endflächen 12 der Spannringsegmente 11.1 in Fig. 1 auch unschaffiert dargestellt.

Um die gebildeten Spannringe 11 am Innenring 4 axial festzulegen, weisen die Spannringe 11 bzw. die Spannringsegmente 11.1 (11.2) nach radial innen weisende Vorsprünge 13 auf, die nach der Montage in im Bereich der Abschnitte 10.1, 10.2 am Innenring 4 vorgesehene Ringnuten 14 eingreifen. Um die Dichtheit zwischen Innenring 4 und den Spannringen 11 zu verbessern, sind zwischen den Spannringen 11 und dem Innenring 4 Dichtungen 20.2 in der Form von O-Ringen vorgesehen.

Durch die jeweiligen Spannringsegmente 11.1 (11.2), die in verbundenen Zustand einen Spannring 11 bilden, sind Bohrungen 15 geführt, die -wie für die Halbschale 11.1 gezeigtsenkrecht zur Papierebene verlaufen. Durch diese Bohrungen 15 sind versenkte Schrauben 16 eingeschraubt, um jeweils die beiden Spannringsegmente 11.1 (11.2) zu einem Spannring 11 zu verbinden.

Sind die jeweiligen Spannringsegmente 11.1, 11.2 zu einem Spannring 11 am Innenring 4 montiert, entsteht eine äußere, ringförmige Umfangsfläche 17, die in diesem Ausführungsbeispiel als Dichtfläche 18 mit einer Dichtlippe 19 einer als Dichtpartner wirkenden, berührenden Dichtung 20.1 in Dichtkontakt steht. Um auszuschließen, dass die Dichtlippe 19 dadurch verschleißt, dass diese mit den Bohrungen 15 in Kontakt kommt, beginnt die Dichtfläche 18 am axial äußeren Ende 21 der Spannrings 11 und endet dort, wo die Bohrungen 15 des Durchmessers D die Spannringe 11 durchdringen. Bezogen auf die Bohrung 15 bedeutet dies, dass der Teil der Umfangsfläche 17, welche als Dichtfläche 18 dient, eine größere axiale Erstreckung als die Umfangsfläche an der anderen Seite der Bohrung 15 hat. Zur besseren Darstellung der Verhältnisse ist daher die Dichtfläche 18, die am axialen Ende 21 des Spannrings 11 beginnt und am Durchmesser D der Bohrung 15 endet, in Fig. 1 dicker gezeichnet.

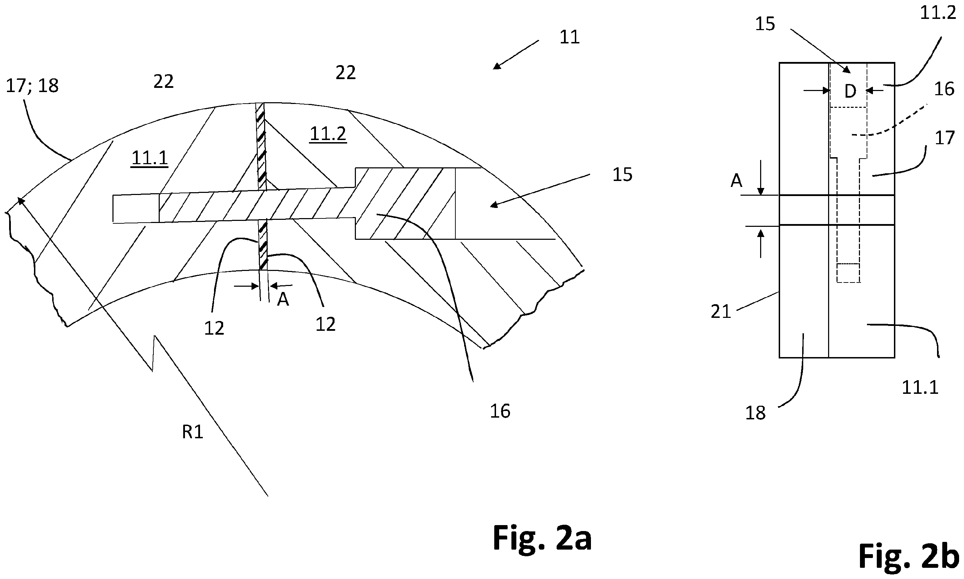

In Fig. 2a sind zwei, einen Spannring 11 bildende Spannringsegmente 11.1, 11.2 im Ausschnitt gezeigt. Beide Spannringsegmente 11.1, 11.2 sind mittels einer Schraube 16 verbunden, die durch in den Spannringsegmenten 11.1, 11.2 vorgesehene Bohrungen 15 geschraubt ist. Sind die beiden Spannringsegmente 11.1, 11.2 durch Anziehen der Schraube 16 am Innenring 4 endmontiert, verbleibt zwischen den Endflächen 12 der beiden Spannringsegmente 11.1, 11.2 ein geringer Abstand A, um die erforderliche Klemmwirkung zu erzeugen. Dieser Abstand A ist in diesem Ausführungsbeispiel mit einem Kunststoffmaterial auf Epoxidharzbasis so ausgefüllt, dass die Umfangsfläche 17 des einen Spannringsegments 11.1 übergangslos, aber unter Beibehaltung des Krümmungsradius' R1, den die Spannringsegmente 11.1, 11.2 vorgeben, in die Umfangsfläche 17 des anderen Spannringsegments 11.2 übergeht.

Fig. 2b zeigt eine Draufsicht auf den Übergang zwischen zwei Spannringsegmenten 11.1, 11.2 gemäß Fig. 2a. Diese Darstellung zeigt auch, dass sich die Umfangsfläche 17 bezogen auf die Bohrung 15 unterschiedlich weit in axialer Richtung ausdehnt und dass der Bereich mit der größeren axialen Ausdehnung als Dichtfläche 18 dient.

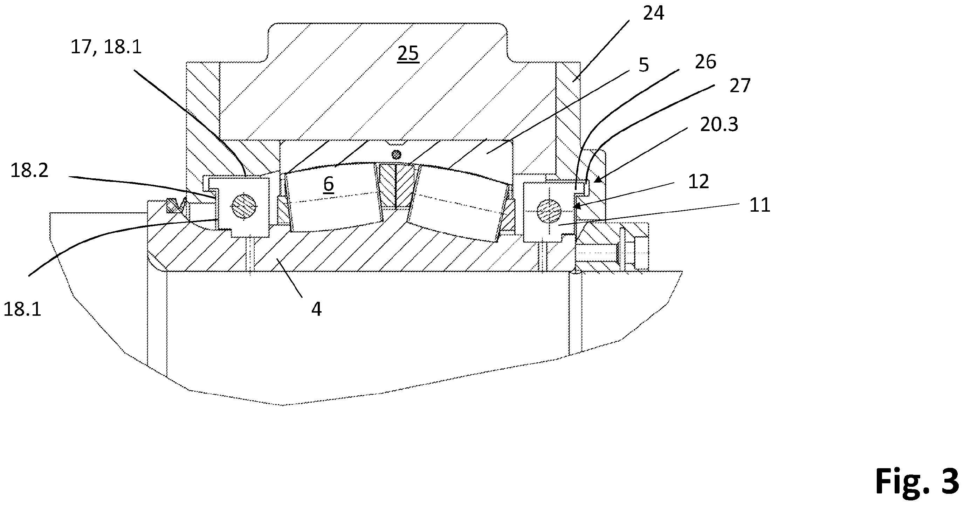

Die Ausführung gemäß Fig. 3 unterscheidet sich von der Ausführung gemäß Fig. 1 lediglich dadurch, dass die dort gezeigte Dichtung keine berührende Dichtung 20.1, sondern eine nicht berührende Dichtung 20.3 ist. Diese nichtberührende Dichtung 20.3 wird im Wesentlichen von den montierten Spannringen 11 und einem Bauteil 24, welches mit dem Gehäuse 25 verbunden ist, gebildet. Dabei bildet nicht nur die äußere Umfangsfläche 17, sondern auch die axiale äußere Endfläche 21 des Spannrings 11 eine gemeinsame, winklig verlaufende Dichtfläche 18.1, die mit einer korrespondierenden, einen geringen Abstand zur Dichtfläche 18.1 einhaltenden und vom Bauteil 24 bereitgestellten Dichtfläche 18.2 zusammenwirkt. Um die Dichtwirkung dieser nichtberührenden Dichtung 20.3 weiter zu verbessern, weisen die Spannringe 11 im Bereich ihrer Endflächen 12 noch nach axial außen gerichtete Ringnasen 26 auf, die korrespondierende Ausnehmungen 27 im Bauteil 24 eingreifen.

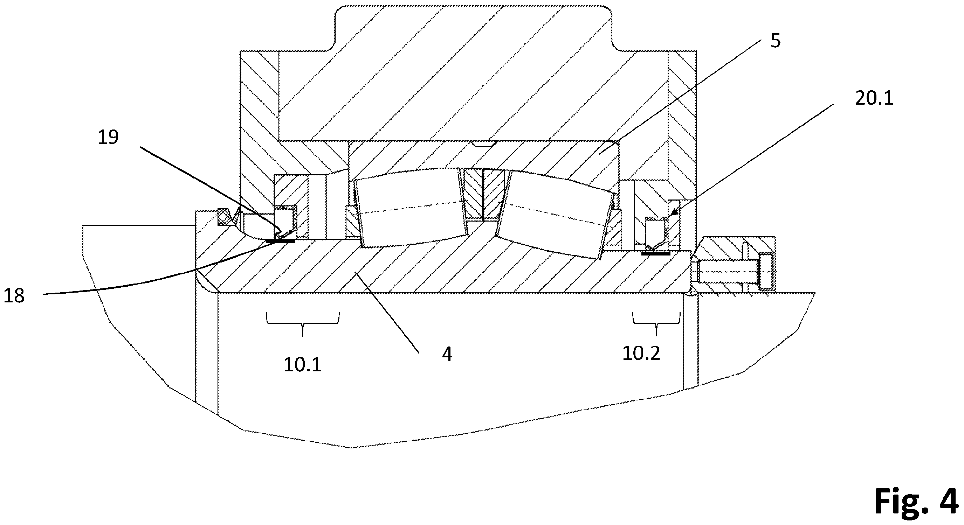

In Fig. 4 ist eine Variante einer Rotorlagerung gemäß Fig. 1 gezeigt. Bei dieser Variante sind die jeweiligen Lagerringe 4, 5 als ungeteilte Lagerringe 4, 5 mit der Rotorwelle 1 verbunden. Daher sind bei dieser Variante auch keine Spannringe 11 erforderlich. Um eine Abdichtung dieser Variante mittels einer berührenden Dichtung 20.1 herzustellen, laufen die Dichtlippen 19 auf von Innenring 4 bereitgestellten Dichtflächen 18 im Bereich der Abschnitte 10.1, 10.2 an. Selbstverständlich kann eine Variante gemäß Fig. 4 in einfacher Fortbildung der Ausführungen zu Fig. 3 auch mit einer nichtberührenden Dichtung 20.3 versehen sein.

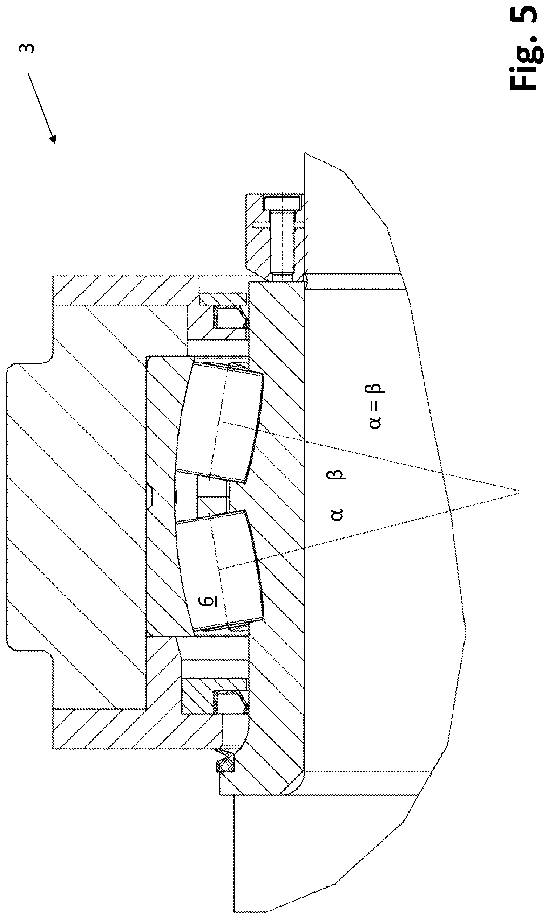

Die in Fig. 5 gezeigte Variante zeigt als Wälzlager 3 ein zweireihiges Pendelrollenlager, bei welchem die Wälzkörper 6 in beiden Rollenreihen unter gleichem Druckwinkel α, β abrollen.

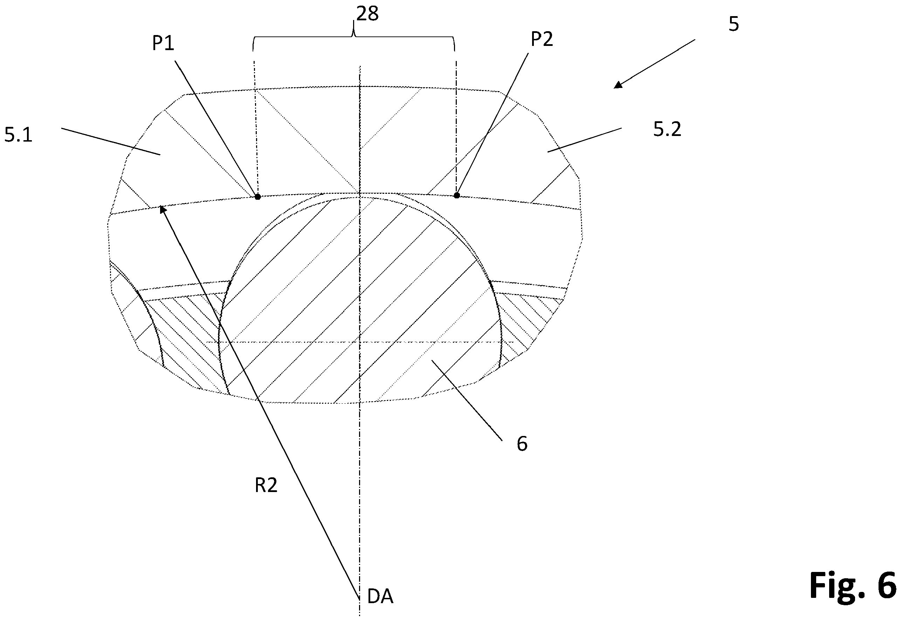

Fig. 6 zeigt den Übergang 28 zwischen zwei einen Außenring 5 bildendenden Halbschalen 5.1, 5.2 eines Wälzlagers 3 entsprechend der Ausführungsform gemäß Fig.1. Diese Sicht, welche in Richtung der Drehachse DA des Wälzlagers 3 verläuft, zeigt eine Laufbahn 29 am Außenring 5 (5.1, 5.2), an welcher die Wälzkörper 6 abrollen. Bis auf den Übergang 28 zwischen zwei Halbschalen 5.1, 5.2 ist die Laufbahn 29 im Außenring 5 bzw. in den Halbschalen 5.1, 5.2 kreisrund ausgebildet, was durch den Radius R2 angedeutet ist. Lediglich im Bereich des Übergangs 28 zwischen den beiden Punkten P1 und P2 verläuft die Laufbahn 29 als Sekante.

Auch wenn in den Ausführungsbeispielen das Wälzlager 3 immer als Pendelrollenlager dargestellt ist, erfolgt damit keine Festlegung auf diese Lagerart. Ebenso ist nicht erforderlich, dass die Rotorwelle 1 eine solche einer Windkraftanlage ist. So können beispielsweise anstelle der Rotorwelle auch andere Maschinenwellen mittels der gezeigten Wälzlagerung gelagert sein, etwa dort, wo es zum Austausch von Wälzlagern 3 sehr aufwändig ist, die gesamte Maschinenwelle auszubauen.

### Bezugszeichenliste

- 1: Rotorwelle
- 2: Rotor
- 3: Wälzlager
- 4: Innenring
- 5: Außenring
- 6: Wälzkörper
- 7: Wellenschulter
- 8: Stirnflächen
- 9: Wellenmutter
- 10: Abschnitt
- 11: Spannring
- 12: Endfläche
- 13: Vorsprung
- 14: Ringnut
- 15: Bohrung
- 16: Schrauben
- 17: Umfangsfläche
- 18: Dichtfläche
- 19: Dichtlippe
- 20: Dichtung
- 21: Axiales Ende
- 22: ---
- 23: ---
- 24: Bauteil
- 25: Gehäuse
- 26: Ringnase
- 27: Ausnehmungen
- 28: Übergang
- 29: Laufbahn

## Patentansprüche

1. Rotorlagerung einer Windkraftanlage
mit einem Wälzlager 3, welches einen Außenring 5, einen Innenring 4 und zwischen Außenring 5 und Innenring 4 abrollenden Wälzkörpern 6,
mit einer Rotorwelle 1, die zwischen zwei radialen, im axialen Abstand zueinander angeordneten Schultern 7, 9 einen axialen Umfangsabschnitt 1.1 der Länge L1 zur Verfügung stellt, welcher den Innenring 4 des Wälzlagers 3 aufnimmt, und
mit einem Rotor 2, der mit der Rotorwelle 1 verbunden ist,
**dadurch gekennzeichnet,**
**dass** der Innenring 4 einen ersten axialen Abschnitt der Länge L2 aufweist, der der axialen Länge L3 des Außenrings 5 entspricht, und zwei zweite, an den ersten Abschnitt axial anschließende Abschnitte 10.1, 10.2 unterschiedlich großer axialer Längen L4.1, L4.2 aufweist.

2. Rotorlagerung nach Anspruch 1
**dadurch gekennzeichnet,**
**dass** der Abschnitt 10.1 des Innenrings 4, der axial längere der beiden Abschnitte ist, im mit der Rotorwelle 1 verbundenen Zustand in Richtung dem mit der Rotorwelle 1 verbundenen Rotors 2 weist.

3. Rotorlagerung nach einem der Ansprüche 1 oder 2
**dadurch gekennzeichnet,**
**dass** Wälzlager 3 ein zweireihiges Pendelrollenlager ist, wobei die Wälzkörper 6 der dem Rotor 2 näheren Rollenreihe im Vergleich zu dem Druckwinkel β der Wälzkörper 6 der anderen Rollenreihe einen geringeren Druckwinkel α aufweisen.

4. Rotorlagerung nach einem der Ansprüche 1 bis 3
**dadurch gekennzeichnet,**
**dass** das Wälzlager ein radial geteiltes Wälzlager ist.

5. Rotorlagerung nach Anspruch 4
**dadurch gekennzeichnet,**
**dass** mindestens zwei Spannringsegmente 11.1, 11.2 vorgesehen sind, die in verbundenem Zustand einen Spannring 11 ergeben, und
**dass** der Innenring 4 auf der Rotorwelle 1 von Spannringen 11 zusammengehalten wird, die die zweiten Abschnitte 10.1, 10.2 umgeben.

6. Rotorlagerung nach Anspruch 5
**dadurch gekennzeichnet,**
**dass** Spannringe 11 zumindest radial äußere Umfangsflächen 17 bereitstellen, die zumindest eine mit einem Dichtpartner 19, 20; 18.1 zusammenwirkende Dichtfläche 18 bilden.

7. Rotorlagerung nach Anspruch 6
**dadurch gekennzeichnet,**
**dass** die jeweiligen Spannringsegmente 11.1, 11.2 mittels von Schrauben 16 verbunden sind, die Bohrungen 15 des Durchmessers D in jeweils zwei benachbarten Spannringsegmenten 11.1, 11.2 durchgreifen, und
**dass** die axiale Ausdehnung der jeweiligen Dichtfläche 18 am axial äußeren Ende 21 des jeweiligen Spannringsegments 11.1, 11.2 beginnt und dort endet, wo die jeweilige Bohrung 15 dieses Spannringsegments 11.1, 11.2 durchdringen.

8. Rotorlagerung nach Anspruch 7
**dadurch gekennzeichnet,**
**dass** die axiale Ausdehnung der Spannringe 11 entlang der Drehachse der Rotorwelle 1 ausgehend von Mittelpunkt der Bohrung 15 unterschiedlich groß ist.

9. Rotorlagerung nach einem der Ansprüche 5 bis 8
**dadurch gekennzeichnet,**
**dass** die umfangseitigen Enden 12 der Spannringsegmente 11.1, 11.2 im montierten Zustand in Umfangsrichtung einen geringen gegenseitigen Abstand A einhalten und dass dieser Abstand A zur Bildung eines glatten, nahtlosen Übergangs zwischen zwei montierten Spannringsegmenten 11.1, 11.2 mit einem Kunststoff oder Metall ausgefüllt ist.

10. Rotorlagerung nach einem der Ansprüche 5 bis 9
**dadurch gekennzeichnet,**
**dass** zwischen den Spannringen 11 und den zweiten Abschnitten 10.1, 10.2 der Innenringe 4 Dichtungen 20.2 vorgesehen sind.

## Claims

1. A rotor bearing of a wind turbine
having a rolling bearing 3 including an outer ring 5, an inner ring 4 and rolling bodies 6 rolling between the outer ring 5 and the inner ring 4,
having a rotor shaft 1 having an axial circumferential section 1.1 with the length L1 between two radial shoulders 7, 9 arranged at an axial distance from one another, which first length receives the inner ring 4 of the rolling bearing 3, and having a rotor 2 connected to the rotor shaft 1,
**characterised in that**
the inner ring 4 has a first axial section with the length L2, which corresponds to the axial length L3 of the outer ring 5, and has two second sections 10.1, 10.2 that are axially adjoined to the first section that have different axial lengths L4.1, L4.2 from one another.

2. The rotor bearing according to claim 1,
**characterised in that**
the section 10.1 or the inner ring 4 that is the axially longer of the two sections points in a direction of the rotor 2 connected to the rotor shaft 1 in a connected state to the rotor shaft 1.

3. The rotor bearing according to one of claims 1 to 2,
**characterised in that**
the rolling bearing 3 is a double-row spherical roller bearing, wherein the rolling bodies 6 of a first roller row closer to the rotor 2 have a smaller pressure angle α compared to a pressure angle β of the rolling bodies 6 of the other roller row.

4. The rotor bearing according to one of claims 1 to 3,
**characterised in that**
the rolling bearing is a radially split rolling bearing.

5. The rotor bearing according to claim 4,
**characterised in that**
at least two clamping ring segments 11.1, 11.2 are provided that form a clamping ring 11 in a connected state, and
the inner ring 4 is held together on the rotor shaft 1 by clamping rings 11 that surround the second sections 10.1, 10.2.

6. The rotor bearing according to claim 5,
**characterised in that**
the clamping rings 11 provide at least radially outer circumferential surfaces 17, which form at least one sealing surface 18 configured to cooperate with a sealing partner 19, 20; 18.1.

7. The rotor bearing according to claim 6,
**characterised in that**
the respective clamping ring segments 11.1, 11.2 are connected to one another by screws 16 that extend in bores 15 of diameter D that pass through two adjacent clamping ring segments 11.1, 11.2, and
the axial extent of the respective sealing surface 18 begins at an axially outer end 21 of the respective clamping ring segment 11.1, 11.2 and ends where the respective bore 15 penetrates said clamping ring segment 11.1, 11.2.

8. The rotor bearing according to claim 7,
**characterised in that**
the axial extent of the clamping rings 11 along the rotational axis of the rotor shaft 1, starting from a centre of the bore 15, differs in size.

9. The rotor bearing according to one of claims 5 to 8,
**characterised in that**
the circumferential ends 12 of the clamping ring segments 11.1, 11.2 maintain a small mutual distance A in the circumferential direction in the assembled state, and **in that** this distance A is filled with a plastic or metal to form a smooth, seamless transition between two assembled clamping ring segments 11.1, 11.2.

10. The rotor bearing according to one of claims 5 to 9,
**characterised in that**
seals 20.2 are provided between the clamping rings 11 and the second sections 10.1, 10.2 of the inner rings 4.

## Revendications

1. Palier de rotor d'une éolienne
comportant un palier à roulement 3 qui comprend une bague externe 5, une bague interne 4 et des corps de roulement 6 roulant entre la bague externe 5 et la bague interne 4,
comportant un arbre de rotor 1 qui fournit une section circonférentielle axiale 1.1 de longueur L1, entre deux épaulements 7, 9 radiaux agencés de façon à être espacés axialement l'un de l'autre, qui reçoit la bague interne 4 du palier à roulement 3 et comportant un rotor 2 qui est relié à l'arbre de rotor 1,
**caractérisé en ce que**
la bague interne 4 présente une première section axiale de longueur L2 qui correspond à la longueur axiale L3 de la bague externe 5 et deux secondes sections 10.1, 10.2 raccordées axialement à la première section de longueurs axiales L4.1, L4.2 de tailles différentes.

2. Palier de rotor selon la revendication 1
**caractérisé en ce que**
la section 10.1 de la bague interne 4, qui est la plus longue axialement des deux sections, est tournée en direction du rotor 2 relié à l'arbre de rotor 1 dans l'état relié à l'arbre de rotor 1.

3. Palier de rotor selon l'une quelconque des revendications 1 ou 2
**caractérisé en ce que**
le palier à roulement 3 est un roulement à rotule sur deux rangées de rouleaux, les corps roulants 6 de la rangée de rouleaux la plus proche du rotor 2, par comparaison avec l'angle de pression β des corps roulants 6 de l'autre rangée de rouleaux, présentant un angle de pression inférieur α.

4. Palier de rotor selon l'une quelconque des revendications 1 à 3
**caractérisé en ce que**
le palier à roulement est un palier à roulement à division radiale.

5. Palier de rotor selon la revendication 4
**caractérisé en ce que**
au moins deux segments de bague de serrage 11.1, 11.2 sont prévus, lesquels forment, dans l'état relié, une bague de serrage 11 et
**en ce que** la bague interne 4 est maintenue sur l'arbre de rotor 1 par des bagues de serrage 11 qui entourent les secondes sections 10.1, 10.2.

6. Palier de rotor selon la revendication 5
**caractérisé en ce que**
les bagues de serrage 11 fournissent au moins des surfaces circonférentielles 17 radialement externes qui forment au moins une surface d'étanchéité 18 coopérant avec un partenaire d'étanchéité 19, 20 ; 18.1.

7. Palier de rotor selon la revendication 6
**caractérisé en ce que**
les segments de bague de serrage 11.1, 11.2 respectifs sont reliés au moyen de vis 16 qui viennent en prise dans des alésages 15 de diamètre D dans respectivement deux segments de bague de serrage 11.1, 11.2 adjacents et
**en ce que** l'expansion axiale de la surface d'étanchéité 18 respective commence au niveau des extrémités 21 axialement externes du segment de bague de serrage 11.1, 11.2 respectif et se termine là où l'alésage 15 respectif pénètre ce segment de bague de serrage 11.1, 11.2.

8. Palier de rotor selon la revendication 7
**caractérisé en ce que**
l'expansion axiale de la bague de serrage 11, le long de l'axe de rotation de l'arbre de rotor 1 en partant du point central de l'alésage 15, est de taille variable.

9. Palier de rotor selon l'une quelconque des revendications 5 à 8
**caractérisé en ce que**
les extrémités côté circonférence 12 des segments de bague de serrage 11.1, 11.2, dans l'état monté dans la direction circonférentielle, présentent un espace A relativement faible et **en ce que** cet espace A est rempli pour la formation d'une transition lisse sans raccord entre deux segments de bague de serrage 11.1, 11.2 montés avec une matière plastique ou un métal.

10. Palier de rotor selon l'une quelconque des revendications 5 à 9
**caractérisé en ce que**
entre les bagues de serrage 11 et les secondes sections 10.1, 10.2 de la bague interne 4, des joints d'étanchéité 20.2 sont prévus.
